# EUROPÄISCHE PATENTANMELDUNG

(11) **EP 2 546 619 A1**
(43) Veröffentlichungstag der Anmeldung: **16.01.2013**
(21) Anmeldenummer: 11174143.5
(22) Anmeldetag: 15.07.2011
(51) Int. Cl.: G01H 1/00, G01M 7/02, F01D 5/16

(54) **Verfahren zum Messen und Berechnen von Schwingungen einer Schaufel in einer Axialturbomaschine**

(71) Anmelder: SIEMENS AKTIENGESELLSCHAFT, 80333 München (DE)
(72) Erfinder: Richter, Christoph Hermann Dr., 49477 Ibbenbüren (DE); Linnemann, Uwe, 41515 Grevenbroich (DE)

(57) **Zusammenfassung**

Ein Verfahren zum Messen, Berechnen und Bestimmen von Schwingungen einer Schaufel (1) in einer Axialturbomaschine weist folgende Schritte auf: Rechnerisches Bestimmen von Modalfeldgrößen für eine Mehrzahl an Schwingungsmoden der Schaufel; Bestimmen von mindestens zwei Messstellen (7,8) auf der Schaufelblattoberfläche und Messen jeweils mindestens einer Messfeldgröße (9,10) an jeder Messstelle (7,8); Bestimmen von modalen Koordinaten der Schaufel aus den mindestens zwei Messfeldgrößen und den Modalfeldgrößen an den Messstellen (7,8); Bestimmen von strukturmechanischen Größen an vorherbestimmten Stellen der Schaufel aus den Modalfeldgrößen an den vorherbestimmten Stellen und den modalen Koordinaten.

## Beschreibung

Die Erfindung betrifft ein Verfahren zum Messen von Schwingungen einer Schaufel in einer Axialturbomaschine.

Eine Axialturbomaschine weist einen Verdichter und eine Turbine auf. Sowohl im Verdichter als auch in der Turbine kommen Schaufeln zum Einsatz, unterschieden werden dabei fest stehende Leitschaufeln und rotierende Laufschaufeln. Die Laufschaufeln sind dabei in Laufrädern fest eingespannt und können schwingen, wobei am Schaufelfuß ein festes Ende und an der Schaufelspitze ein loses Ende vorliegt. Folgegemäß liegt bei einer Schwingung immer ein Schwingungsknoten am Schaufelfuß. In Abhängigkeit des Betriebszustands der Axialturbomaschine kann es dabei zu Schwingungsvorgängen kommen, bei denen Schwingungszustände mit hohen und kritischen Spannungen in der Schaufel auftreten. Bei einer langen zeitlichen Belastung der Schaufel durch kritische Spannungszustände kommt es zu einer Materialermüdung, die letztendlich zu einer Lebensdauerreduzierung der Schaufel führen kann, welche einen Austausch der Schaufel notwendig macht. Zur Überwachung der kritischen Spannungszustände ist es erforderlich die Schwingungen zu messen, damit durch geeignetes Einstellen des Betriebszustands Belastungen zeitlich kurz gehalten werden können.

Gemessen werden die Schwingungen der Schaufel an Messstellen auf der Schaufelspitze, wobei die Messungen mit einem optischen Messverfahren oder mittels Radar durchgeführt werden. Durch die Messungen der Schwingungen an der Schaufelspitze werden keine Information über den Schwingungszustand im Bereich unterhalb der Schaufelspitze erhalten, insbesondere werden keine Informationen darüber erhalten, ob neben dem Schwingungsknoten am Schaufelfuß weitere Schwingungsknoten vorliegen, es ist folglich keine Aussage über die Schwingungsmode möglich. Um Aussagen über mögliche Materialermüdungen zu treffen, ist jedoch eine Kenntnis des Schwingungszustands der Schaufel über die gesamte Schaufelhöhe erforderlich, insbesondere ist eine Kenntnis des Schwingungszustands am Schaufelfuß erforderlich.

Aufgabe der Erfindung ist es, ein Messverfahren zum Messen von Schwingungen der Schaufel im Betrieb der Axialturbomaschine zu schaffen, wobei das Messverfahren Informationen über den Schwingungszustand der gesamten Schaufel und Informationen über mechanische Schwingungsbelastungen der Schaufel liefert.

Das erfindungsgemäße Verfahren zum Messen von Schwingungen einer Schaufel in einer Axialturbomaschine weist folgende Schritte auf: Rechnerisches Bestimmen von Modalfeldgrößen für eine Mehrzahl an Schwingungsmoden der Schaufel; Bestimmen von mindestens zwei Messstellen auf der Schaufelblattoberfläche und Messen jeweils mindestens einer Messfeldgröße an jeder Messstelle; Bestimmen von modalen Koordinaten der Schaufel aus den mindestens zwei Messfeldgrößen und den Modalfeldgrö-βen an den Messstellen; Bestimmen von strukturmechanischen Größen an vorherbestimmten Stellen der Schaufel aus den Modalfeldgrößen an den vorherbestimmten Stellen und den modalen Koordinaten.

Gemäß dem erfindungsgemäßen Verfahren wird eine Mehrzahl von relevanten Schwingungsmoden der Schaufel berechnet. Für jede Schwingungsmode werden für jeden Punkt der Schaufel die Modalfeldgrößen berechnet. Anschließend werden mindestens zwei Messstellen auf der Schaufelblattoberfläche bestimmt und an jeder dieser Messstellen wird mindestens eine Messfeldgröße gemessen. Die Schwingung der Schaufel lässt sich als Linearkombination der Schwingungsmoden darstellen. Durch Vergleich der Modalfeldgrößen an den Messstellen und den Messfeldgrößen werden die Koeffizienten der Linearkombination erhalten. Die Koeffizienten der Linearkombination werden in den modalen Koordinaten gesammelt. Anschließend werden die modalen Koordinaten auf die rechnerisch bestimmten Modalfeldgrö-βen angewendet, um strukturmechanische Größen an vorherbestimmten Stellen zu bestimmen. Das erfindungsgemäße Verfahren ermöglicht es vorteilhaft zu bestimmen, aus welchen Schwingungsmoden die Schwingung der Schaufel zusammengesetzt ist. Ferner ermöglicht es das erfindungsgemäße Verfahren vorteilhaft strukturmechanische Größen an den vorherbestimmten Stellen der Schaufel zu bestimmen, die nicht identisch mit den Messstellen sind.

Bevorzugt sind die Modalfeldgrößen, die Messfeldgrößen und die strukturmechanischen Größen Auslenkungen, Verschiebungen, Dehnungen, Geschwindigkeiten und/oder Spannungen. Das erfindungsgemäße Verfahren ermöglicht es vorteilhaft, die Messfeldgrößen, wie z.B. Geschwindigkeiten, mit den rechnerisch bestimmten Modalfeldgrößen, also in diesem Fall rechnerisch bestimmte Geschwindigkeiten, zu vergleichen, um daraus die modalen Koordinaten zu bestimmen. Aus den modalen Koordinaten und den rechnerisch bestimmten Modalfeldgrößen lassen sich strukturmechanische Größen an vorherbestimmten Stellen der Schaufel bestimmen. Die strukturmechanischen Größen können dabei vorteilhaft andere Größen als Geschwindigkeiten sein, wie z.B. Spannungen, vorausgesetzt die anderen Größen wurden im ersten Verfahrensschritt rechnerisch bestimmt.

Bevorzugt liegen mehr Messstellen als Schwingungsmoden vor. Dadurch ergibt sich vorteilhaft eine höhere Genauigkeit bei der Bestimmung der modalen Koordinaten.

Die Messfeldgrößen werden bevorzugt relativ zur Rotation der Axialturbomaschine gemessen. Des Weiteren werden die Messfeldgrößen mit einem optischen Messverfahren, mittels Radar und/oder mittels elektromagnetischer Sensoren, gemessen. Die Modalfeldgrößen werden bevorzugt durch eine Finite Elemente Methode rechnerisch bestimmt.

Die mindestens eine vorherbestimmte Stelle ist bevorzugt am Schaufelfuß angeordnet. Insbesondere der Schaufelfuß ist bei der Schwingung der Schaufel einer hohen Belastung ausgesetzt, insbesondere durch hohe Spannungen. Durch das erfindungsgemäße Verfahren lassen sich vorteilhaft strukturmechanische Größen, insbesondere Spannungen, am Schaufelfuß bestimmen.

Das erfindungsgemäße Verfahren wird bevorzugt mit dem Schritt durchgeführt: Bestimmen einer zeitlichen Entwicklung der strukturmechanischen Größe an der mindestens einen vorherbestimmten Stelle durch Wiederholen der Verfahrensschritte.

Im Folgenden wird anhand der beigefügten schematischen Zeichnungen die Erfindung näher erläutert. Die Figuren zeigen schematische Darstellungen einer in einem Rotor einer Axialturbomaschine eingespannten Schaufel im Schaufelquerschnitt in zwei verschiedenen Schwingungszuständen.

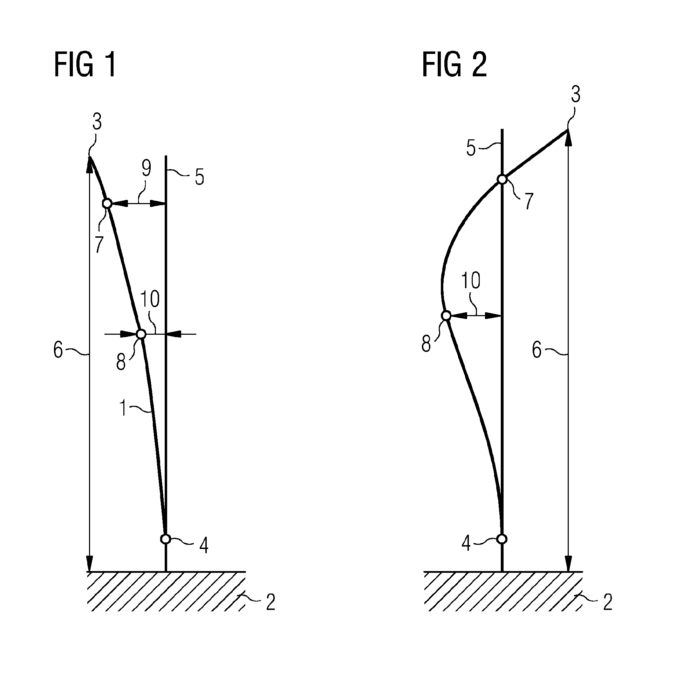

Wie es aus Figuren 1 und 2 ersichtlich ist, ist eine Schaufel 1 an einer Einspannung 2 eines Rotors einer Axialturbomaschine befestigt. Die Schaufel 1 weist an dem der Einspannung 2 abgewandten Ende eine Schaufelspitze 3 auf. In der Nähe des Schaufelfußes (nicht dargestellt), an dem der Einspannung 2 zugewandten Ende der Schaufel 1, ist eine feste Endstelle 4 angeordnet. Eine vertikale Linie, welche von der Einspannung 2 ausgeht, bezeichnet die Schaufellage im Ruhezustand 5. Die Schaufelhöhe 6 erstreckt sich weg von der Einspannung 2 bis zur Schaufelspitze 3. Auf der Schaufel 1 sind zwei Messstellen 6, 7 auf zwei unterschiedlichen Schaufelhöhenniveaus angeordnet, mit einer oberen Messstelle 6 und einer unteren Messstelle 7, wobei beide Messstellen 6, 7 zwischen der Schaufelspitze 3 und der festen Endstelle 4 angeordnet sind. Der Abstand zwischen der oberen Messstelle 7 und der Schaufellage im Ruhezustand 5 ist die Auslenkung der oberen Messstelle 9, der Abstand zwischen der unteren Messstelle 8 und der Schaufellage im Ruhezustand 5 ist die Auslenkung der unteren Messstelle 10. Die Schaufel 1 in Figuren 1 und 2 weist Schwingungszustände mit Schaufellagen auf, welche von der Schaufellage im Ruhezustand 5 verschieden sind. Beide Schwingungszustände weisen jeweils einen Schwingungsknoten an der festen Endstelle 4 auf. Der Schwingungszustand der Schaufel in Fig. 1 weist nur einen Schwingungsknoten auf, nämlich den an der festen Endstelle 4. Die maximale Auslenkung tritt an der Schaufelspitze 3 auf. Der Schwingungszustand in Fig. 2 hat zwei Schwingungsknoten, wobei neben dem Schwingungsknoten an der festen Endstelle 4 ein zweiter Schwingungsknoten an der oberen Messstelle 7 auftritt. Die maximale Auslenkung tritt zwischen oberer Messstelle 9 und unterer Messstelle 10 auf.

Anhand eines Beispiels wird im Folgenden das erfindungsgemäße Verfahren näher erläutert.

Für die Schaufel 1 werden mit einer Finite Elemente Methode verschiedene Schwingungsmoden gerechnet, und zwar Schwingungsmoden mit einem, zwei und drei Schwingungsknoten in Radialrichtung, sowie Schwingungsmoden mit einem und zwei Schwingungsknoten in Umfangsrichtung. Berechnet werden für jeden der Schwingungsmoden und für jeden Punkt der Schaufel Geschwindigkeiten, Auslenkungen und Spannungen. Es werden zehn Messstellen zur Messung einer Geschwindigkeit auf der Schaufelblattoberfläche derart angeordnet, dass eine Identifikation der Schwingungsmoden durch einen Vergleich der rechnerisch bestimmten Modalfeldgrößen an den Messstellen und den Messfeldgrößen möglich ist. Die Geschwindigkeiten an den Messstellen werden für jede Messstelle beispielsweise mittels Radar relativ zur Rotation der Axialturbomaschine gemessen. Die derart gemessenen Geschwindigkeiten werden durch eine Linearkombination der rechnerisch bestimmten Geschwindigkeiten der verschiedenen Schwingungsmoden an den Messstellen ausgedrückt. Die Koeffizienten der Linearkombination werden in den modalen Koordinaten gesammelt. Die modalen Koordinaten werden auf die rechnerisch bestimmten Spannungen angewendet und die Spannungen am Schaufelfuß werden bestimmt. Durch Wiederholen der Verfahrensschritte wird die zeitliche Entwicklung der Spannungen am Schaufelfuß bestimmt.

## Patentansprüche

1. Verfahren zum Messen von Schwingungen einer Schaufel (1) in einer Axialturbomaschine, mit den Schritten:
- Rechnerisches Bestimmen von Modalfeldgrößen für eine Mehrzahl an Schwingungsmoden der Schaufel (1);
- Bestimmen von mindestens zwei Messstellen (7, 8) auf der Schaufelblattoberfläche und Messen jeweils mindestens einer Messfeldgröße an jeder Messstelle (7, 8);
- Bestimmen von modalen Koordinaten der Schaufel aus den mindestens zwei Messfeldgrößen und den Modalfeldgrößen an den Messstellen (7, 8);
- Bestimmen von strukturmechanischen Größen an vorherbestimmten Stellen der Schaufel aus den Modalfeldgrößen an den vorherbestimmten Stellen und den modalen Koordinaten.

2. Verfahren gemäß Anspruch 1,
wobei die Modalfeldgrößen Auslenkungen, Verschiebungen, Dehnungen, Geschwindigkeiten und/oder Spannungen sind.

3. Verfahren gemäß Anspruch 1 oder 2, wobei die Messfeldgrößen Auslenkungen, Verschiebungen, Dehnungen, Geschwindigkeiten und/oder Spannungen sind.

4. Verfahren gemäß einem der Ansprüche 1 bis 3,
wobei die strukturmechanischen Größen Auslenkungen, Verschiebungen, Dehnungen, Geschwindigkeiten und/oder Spannungen sind.

5. Verfahren gemäß einem der Ansprüche 1 bis 4,
wobei mehr Messstellen als Schwingungsmoden vorliegen.

6. Verfahren gemäß einem der Ansprüche 1 bis 5,
wobei die Messfeldgrößen relativ zur Rotation der Axialturbomaschine gemessen werden.

7. Verfahren gemäß einem der Ansprüche 1 bis 6,
wobei die Messfeldgrößen mit einem optischen Messverfahren, mittels Radar und/oder mittels elektromagnetischer Sensoren gemessen werden.

8. Verfahren gemäß einem der Ansprüche 1 bis 7,
wobei die Modalfeldgrößen durch eine Finite Elemente Methode rechnerisch bestimmt werden.

9. Verfahren gemäß einem der Ansprüche 1 bis 8,
wobei die mindestens eine vorherbestimmte Stelle am Schaufelfuß angeordnet ist.

10. Verfahren gemäß einem der Ansprüche 1 bis 9,
mit dem Schritt: Bestimmen einer zeitlichen Entwicklung der strukturmechanischen Größe an der mindestens einen vorherbestimmten Stelle durch Wiederholen der Verfahrensschritte.
